Europäisches Patentamt

European Patent Office

Office européen des brevets

(11) Numéro de publication: **0 000 682**
**B1**

(12)                        **FASCICULE DE BREVET EUROPEEN**

(45) Date de publication du fascicule du brevet: **04.05.83**

(51) Int. Cl.³: **F 16 K 5/20, F 16 K 5/18**

(21) Numéro de dépôt: **78400065.5**

(22) Date de dépôt: **21.07.78**

(54) **Vanne à tournant, à passage intégral.**

(30) Priorité: **25.07.77 FR 7722799**

(43) Date de publication de la demande:
**07.02.79 Bulletin 79/3**

(45) Mention de la délivrance du brevet:
**04.05.83 Bulletin 83/18**

(84) Etats contractants désignés:
**BE CH DE GB LU**

(56) Documents cités:
**FR - A - 1 593 350**
**FR - A - 2 053 455**
**US - A - 2 531 759**

(73) Titulaire: **ATELIERS BOUVIER Société anonyme dite:**
**53, rue Pierre Sémard**
**F-38028 Grenoble Cedex (FR)**

(72) Inventeur: **Manzon, Paul**
**23 rue Docteur Calmette**
**F-38000 Grenoble (FR)**

(74) Mandataire: **Harlé, Robert et al,**
**c/o Cabinet Harlé & Phélip 21, rue de la Rochefoucauld**
**F-75009 Paris (FR)**

## Vannè à tournant, à passage intégral

La présente invention est relative à une vanne à tournant et à passage intégral.

Dans la technique usuelle, les vannes à tournant et à passage intégral comportent un tournant sphérique, cylindrique ou conique, présentant une lumière ronde. Les garnitures d'étanchéité sont montées sur le corps de la vanne et frottent sur le tournant pendant sa rotation.

Il s'ensuit que le choix des matériaux pour les joints et le tournant obéit à des contraintes spéciales si l'on veut que l'étanchéité de la vanne, lorsqu'elle est formée, subsiste après un certain nombre de manoeuvres. Si le fluide qui traverse la vanne est corrosif, il arrive qu'on se trouve dans des conditions telles qu'aucun matériau ne puisse résister de façon satisfaisante à la fois à la corrosion par le fluide et à l'abrasion due au frottement du tournant sur le joint, et on est obligé de se rabattre sur des vannes d'un autre type, plus compliquées, donc plus coûteuses.

On connaît en effet des vannes dites à sièges parallèles, à deux opercules, dans lesquelles un équipage mobile porte deux opercules qui viennent porter sur des joints d'étanchéité pour assurer la fermeture. Pour passer de la position de fermeture à la position d'ouverture complète, les opercules subissent deux mouvements successifs, d'abord un mouvement dans une direction parallèle à celle de la conduite portant la vanne, de façon à écarter les opercules de leurs sièges, puis un mouvement dans une direction perpendiculaire au précédent de façon à dégager complètement le passage à travers la vanne. De telles réalisations permettent d'obtenir une étanchéité de longue durée, car l'opercule n'est soumis à aucun frottement contre son siège et sa garniture d'étanchéité. En revanche, elles exigent des dispositifs mécaniques relativement compliqués.

La présente invention a pour objet de fournir une vanne qui allie à la simplicité d'une vanne à tournant des caractéristiques d'étanchéité et de durée qui ne sont obtenues jusqu'ici qu'avec des vannes à sièges parallèles, à deux opercules.

On a déjà proposé de combiner les avantages de la vanne à tournant avec ceux de la vanne à opercules mobiles.

Par exemple, le brevet US 2.531.759 décrit une vanne à tournant dans lequel le tournant porte l'opercule et l'entraîne dans sa rotation: lorsqu'on approche de la position de fermeture, le bord de l'opercule vient buter sur le bord du joint d'étanchéité, et une came faisant partie du tournant pousse alors l'opercule contre ce joint. Une telle disposition peut aboutir à une détérioration rapide du joint d'étanchéité, car l'opercule ne se déplace pas perpendiculairement à son plan.

Le brevet FR 1.593.350 décrit une vanne de type analogue, mais dans laquelle la came, qui pousse l'opercule, ne fait pas partie du tournant, mais fait partie d'une pièce intermédiaire portée par le tournant avec un moyen élastique intercalé. De plus, une butée spéciale est prévue pour arrêter l'opercule en dehors de la zone qui constitue le joint d'étanchéité. Une telle disposition est de nature à ménager le joint d'étanchéité et à augmenter sa durée, mais ce gain est limité car le déplacement de l'opercule au moment de la fermeture est encore un pivotement autour d'un point situé à proximité du plan de joint d'étanchéité.

Dans le brevet FR 2.053.455, un opercule est relié au tournant par un système de biellette. La tête d'une biellette est guidée par une rainure et une butée du corps de façon à imprimer à l'opercule un mouvement perpendiculaire à son plan au moment de la fermeture. Une telle disposition est plus rationnelle du point de vue cinématique, mais elle n'est guère plus simple que celle d'une vanne du type à sièges parallèles.

Ainsi, il apparaît qu'on n'a pas jusqu'ici obtenu un compromis satisfaisant entre la simplicité du joint à tournant et la disposition rationnelle de la vanne à sièges parallèles.

La vanne selon la présente invention présente des caractères communs avec chacun des deux types de vannes, car elle comporte à la fois un tournant à passage intégral et des opercules se déplaçant perpendiculairement à leurs sièges.

Plus précisément, l'invention concerne une vanne à tournant et à passage intégral, telle que définie à la revendication 1. De préférence la zone d'action de la pièce intermédiaire sur l'opercule se trouve au voisinage de l'axe de ce dernier.

Ainsi, la vanne selon l'invention peut permettre un déplacement rationnel de l'opercule au moment de la fermeture, grâce au fait que l'opercule peut être guidé dans la direction voulue, et notamment avoir un mouvement rectiligne, perpendiculaire à son plan, ce qui, comme on l'a vu plus haut, n'est pas possible lorsqu'il est en butée à ce moment, car son seul mouvement possible est alors un pivotement autour du point de butée, qui est dans son plan ou proche de ce plan, et qui n'est possible que de façon approchée lorsqu'il est porté par des biellettes, malgré la complication de ce dernier système.

Le guidage de l'opercule peut être obtenu de façon simple en prévoyant que le tournant porte l'opercule par l'intermédiaire d'un logement faisant partie dudit tournant et dans lequel un téton porté par la face interne de l'opercule coulisse librement dans le sens de l'axe de l'opercule.

Dans ce cas, il est préférable que l'opercule comporte en outre une nervure périphérique qui coopère avec deux guides circulaires portés respectivement par le fond du corps et par le chapeau afin de limiter l'amplitude des pivotements de l'opercule provenant du jeu du téton dans son logement.

Selon une variante, le tournant porte l'opercule par l'intermédiaire d'étriers de maintien et d'entraînement qui pénètrent dans une gorge périphérique de l'opercule avec un jeu suffisant pour permettre son déplacement sous l'action de la pièce intermédiaire. Dans ce cas, on évite d'avoir une pièce coulissant dans un ajutage, ce qui peut être gênant dans certains cas particuliers de température ou de nature des corps, mais au prix d'une complication de la forme du tournant.

Selon une autre variante, l'opercule est porté directement par la pièce intermédiaire tout en pouvant se déplacer par rapport à cette pièce le long de l'axe de l'opercule.

Dans ce cas, on peut simplifier au maximum la forme du tournant, pièce encombrante, la complication étant reportée sur la pièce intermédiaire, qui est de plus petites dimensions.

Dans tous les cas, selon une disposition particulièrement avantageuse, les moyens de maintien de l'opercule sont prévus pour permettre à l'opercule de tourner autour de son axe en roulant sur le corps pendant la rotation du tournant, et le corps ou le chapeau de la vanne comporte un guide circulaire qui coopère avec le bord de l'opercule pour l'entraîner en rotation lorsque le tournant est lui-même en rotation, c'est-à-dire que si l'opercule comporte un téton pénétrant dans un logement, ce téton est à section circulaire et de même axe que l'opercule, et que si l'opercule est maintenue par des étriers pénétrant dans une rainure, celle-ci a la forme d'un cercle complet de même axe que l'opercule. Cette disposition permet de réaliser un auto-rodage des garnitures d'étanchéité.

De préférence, un moyen élastique exerce sur la pièce intermédiaire une force tendant à la maintenir en position de repos, cette force étant surmontée par celle exercée par la butée pour le passage en position active, et avantageusement la vanne comprend un ressort supplémentaire destiné à faciliter le recul de l'opercule vers le tournant lors de l'ouverture. On évite ainsi tout risque de frottement non désiré de l'opercule contre le corps de vanne.

L'invention va être décrite de façon plus détaillée en s'aidant des figures, lesquelles sont relatives à un exemple non limitatif de réalisation selon l'invention et parmi lesquelles:

Fig. 1 est une vue en demi-coupe verticale d'une vanne selon l'invention en position fermée;

Fig. 2 est une vue en coupe horizontale partielle de la même vanne également en position fermée;

Fig. 3 est un schéma en perspective montrant la relation des pièces mobiles;

Fig. 4 est une vue en coupe horizontale partielle d'une variante de la vanne des figures précédentes.

Le corps de vanne 1 comprend un chapeau 2, un fond 3 et deux embouts 4, à souder sur des conduites.

Le tournant 5, de forme générale tubulaire, porte à sa partie supérieure une tige de manoeuvre 6 qui traverse le chapeau 2 du corps, et, à sa partie inférieure, un pivot 7, coaxial à la tige de manoeuvre, et qui pénètre dans un logement 8 du fond 3 du corps. Il supporte deux opercules 10 pourvus, vers leur périphérie, d'une garniture d'étanchéité 11 destinée à coopérer avec une garniture correspondante 12 solidaire du corps. Le tournant comprend un logement 14 dans lequel un téton 13 porté par la face interne de l'opercule coulisse librement dans le sens axial de l'opercule, ce qui assure l'entraînement de l'opercule par le tournant lors de la rotation de celui-ci. L'opercule comporte en outre une nervure périphérique 15 qui coopère avec un guide 16, circulaire, porté par le fond 3 du corps, et un guide analogue 17, porté par le chapeau 2. Le rôle des guides 16, 17 est de limiter l'amplitude des pivotements vers le haut ou vers le bas de l'opercule dans un jeu du téton 13 dans son logement 14 pendant le mouvement de rotation du tournant, et de prévenir un engagement défectueux de l'opercule lors de la fermeture.

Des butées 18, portées par le tournant, ont le même rôle en ce qui concerne les pivotements de l'opercule vers l'avant ou vers l'arrière dans le sens de rotation du tournant.

La pièce intermédiaire 19 a la forme générale d'un coin, présentant un évidement central. Plus précisément, elle comprend un corps 20 prolongé par deux ailes 21 qui sont reliées à leur extrémité opposée au corps 20 par une traverse 22. La face interne 23 des ailes 21, c'est-à-dire celle qui est tournée vers le centre du tournant 5, est oblique, si bien que la largeur des ailes 21 diminue en s'éloignant du corps 20; cette face interne 23 constitue une surface de came qui vient porter sur un bossage oblique 24 solidaire du tournant 5. La face externe de l'extrémité des ailes 21 et de la traverse 22 est constituée en surface d'appui 25 qui vient en contact, lors de la fermeture, avec la face interne de l'opercule 10 dans la région centrale de cet opercule.

Un ressort 26, travaillant à la compression, est placé entre les ailes 21 et prend appui, d'une part, sur le corps 20 de la pièce intermédiaire, et, d'autre part, sur un bossage 27 du tournant 5. Ce bossage est traversé par le logement 14 du téton 13, et sa partie supérieure pénètre entre les ails 21 et constitue un arrêt pour la traverse 22, limitant ainsi la course du ressort 26.

Le corps de vanne 1 porte un bossage 28 sur lequel vient porter l'extrémité 29 du corps 20 de la pièce intermédiaire à la fin du mouvement de rotation du tournant 5 dans le sens de la fermeture. La surface de l'extrémité 29 du corps 20 qui vient en contact avec la butée 28 est arrondie de façon à permettre un léger pivotement dans un sens perpendiculaire à l'axe de rotation du tournant.

Le fonctionnement de la vanne est le suivant: en position ouverte, le tournant 5 est aligné avec les embouts 4 de façon à assurer au fluide un passage de section uniforme, les opercules 10 sont sensiblement dans un plan vertical parallèle au passage du fluide, la pièce intermédiaire 19 est en position de repos, c'est-à-dire qu'elle est poussée par le ressort 26 qui l'écarte du bossage 27, est maintenue en position par l'appui de la traverse 22 sur le même bossage 27. De ce fait, la pièce intermédiaire 19 n'exerce aucune pression sur l'opercule 10. Si l'on désire passer à la position fermée, on actionne le tournant 5 à l'aide de la tige 6, de façon à le faire tourner sur son axe vertical. Les opercules · 10 sont entraînés dans le mouvement par le téton 13, leur position relative par rapport au tournant 5 étant maintenue, avec un léger jeu, grâce aux guides 16, 17 et aux butées 18. La pièce intermédiaire 19 est entraînée avec le tournant 5. Lorsqu'on arrive à la fin du mouvement de fermeture, l'extrémité 29 de la pièce intermédiaire vient en contact avec la butée 28 qui l'arrête. Le tournant 5 continuant son mouvement, le bossage oblique 24 vient agir sur la surface de camme 23 et fait basculer la pièce intermédiaire qui, par l'intermédiaire de la surface d'appui 25, vient écarter l'opercule 10 du tournant 5 et amène sa garniture 11 à coopérer avec la garniture 12, portée par le corps, pour assurer l'étanchéité.

Pour l'ouverture, les mêmes mouvements ont lieu en sens inverse.

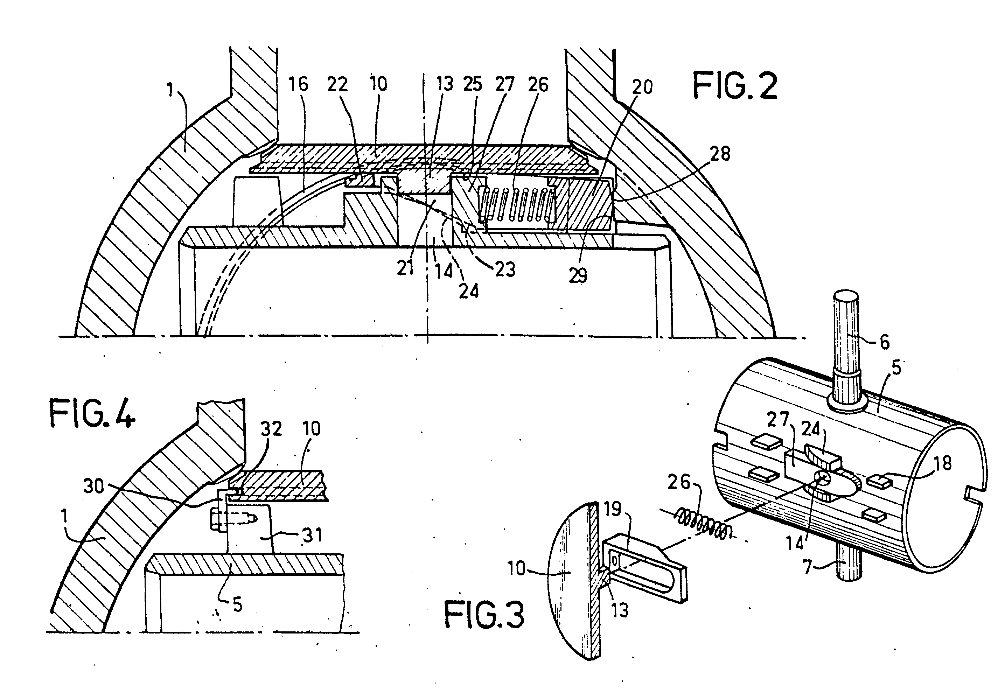

On notera l'extrême simplicité du mécanisme qui, comme le montre la figure 3, comprend seulement trois pièces mobiles dans le cas d'un opercule unique, et cinq pièces mobiles dans le cas de deux opercules.

On notera aussi l'extrême facilité du démontage, les pièces mobiles ne comportant aucun vissage, clavetage ou analogue.

On notera encore deux facteurs favorables à l'obtention d'une excellente étanchéité: d'une part, l'auto-rodage des garnitures grâce à la mise en rotation de l'opercule lorsqu'il roule sur l'un des guides circulaires 16, 17, et, d'autre part, l'égale répartition de la pression sur les garnitures grâce à la position de la zone de contact de la surface d'appui 25 dans la zone centrale de l'opercule.

Bien entendu, le dispositif est susceptible de présenter des variantes. Par exemple, dans l'une d'elles, l'ensemble d'entraînement et de guidage de l'opercule, comprenant le téton 13, les guides 16, 17 et les butées 18, est remplacé par un autre ensemble, illustré par la figure 4, et comprend un opercule 10 dont le bord comporte une gorge périphérique 32 et des étriers 30 de maintien et d'entraînement, vissés sur des supports 31 faisant partie du tournant 5 et qui pénètrent dans cette gorge périphérique 32. Le jeu des étriers 30 dans la gorge 32 est calculé pour permettre un déplacement convenable de l'opercule 10 sous l'action de la pièce intermédiaire 19 ainsi que la rotation de l'opercule sur lui-même. A cet effet, la gorge 32 est prévue sur toute la périphérie de l'opercule.

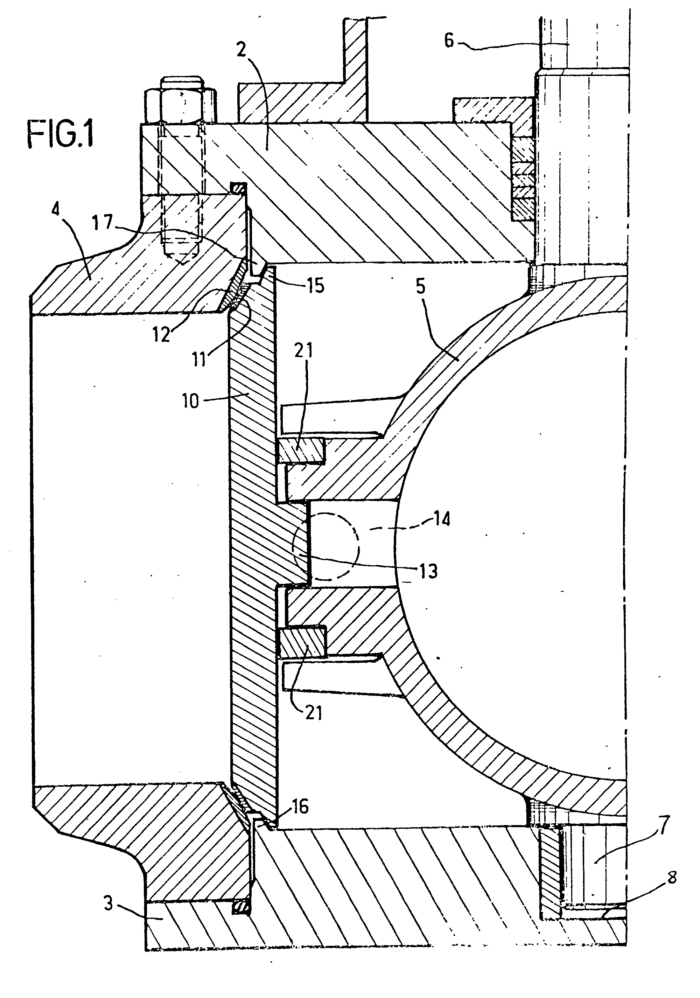

Cette variante, illustrée par la figure 4, a pour avantage essentiel de conférer à l'opercule une meilleure adhérence grâce à une plus grande souplesse due à la gorge périphérique, le fonctionnement et l'agencement entre l'opercule et le siège restant semblables au mode de réalisation décrit à l'aide des figures 1 à 3. Dans une autre variante, un ressort supplémentaire facilite le recul de l'opercule vers le tournant lors de l'ouverture.

Dans tous les cas, l'invention assure un passage direct en même temps qu'une étanchéité parfaite et durable particulièrement appréciable dans la manipulation de gaz ou liquides corrosifs et/ou dangereux.

**Revendications**

1. Vanne à tournant et à passage intégral, comprenant un corps (1) qui peut être raccordé sur deux côtés opposés à deux conduites ayant le même axe, un tournant (5) mobile à l'intérieur dudit corps par rotation autour d'un axe perpendiculaire à l'axe commun des conduites, ledit tournant étant traversé par une lumière de section voisine de celle des conduites et pouvant tourner depuis une position ouverture, où la lumière a sensiblement le même axe que les conduites, à une position fermée, où l'axe de la lumière fait avec l'axe des conduites un angle à peu près droit, le corps et le tournant étant pourvus de moyens pour assurer l'étanchéité de la vanne dans la position fermée, le tournant portant au moins un opercule (10) mobile dans une direction perpendiculaire à l'axe de rotation ainsi qu'une pièce intermédiaire (19) placée entre le tournant et l'opercule et mobile par rapport au tournant, le corps présentant une butée (28) contre laquelle la pièce intermédiaire s'appuie en fin de rotation à l'approche de la position fermée, mais qui ne limite pas la rotation du tournant, ce qui entraîne par le mouvement relatif entre ces pièces que la position relative de l'opercule est modifiée d'une position de repos à une position active où la pièce intermédiaire exerce sur l'opercule une force tendant à l'écarter du tournant pour venir assurer l'étanchéité dans la position fermée, caractérisée en ce que la pièce intermédiaire est constituée par un coulisseau qui peut glisser entre l'opercule et le tournant, qui s'appuie contre la butée au cours de la rotation du tournant et qui présente une surface de came pour coopérer avec une surface de came prévue sur le tournant.

2. Vanne selon la revendication 1, caractérisée en ce que le tournant (5) porte l'opercule (10) par l'intermédiaire d'un logement (14) faisant partie dudit tournant (13) et dans lequel un téton (13) porté par la face interne de l'opercule coulisse librement dans le sens de l'axe de l'opercule.

3. Vanne selon la revendication 2, caractérisée en ce que l'opercule comporte en outre une nervure périphérique (15), qui coopère avec deux guides circulaires (16, 17) portés respectivement par le fond du corps et par le chapeau afin de limiter l'amplitude des pivotements de l'opercule provenant du jeu du téton dans son logement.

4. Vanne selon la revendication 1, caractérisée en ce que le tournant porte l'opercule par l'intermédiaire d'étriers (30) de maintien et d'entraînement (30) qui pénètrent dans une gorge périphérique (32) de l'opercule avec un jeu suffisant pour permettre son déplacement sous l'action de la pièce intermédiaire.

5. Vanne selon la revendication 1, caractérisée en ce que l'opercule (10) est porté directement par la pièce intermédiaire (19) tout en pouvant se déplacer par rapport à cette pièce le long de l'axe de l'opercule.

6. Vanne selon l'une des revendications 1 à 5, caractérisée en ce que les moyens de maintien de l'opercule sont prévus pour permettre à l'opercule de tourner autour de son axe en roulant sur le corps pendant la rotation du tournant, et en ce que le corps ou le chapeau de la vanne comporte un guide circulaire (16, 17) qui coopère avec le bord de l'opercule pour l'entraîner en rotation lorsque le tournant est lui-même en rotation.

7. Vanne selon l'une des revendications 1 à 6, caractérisée en ce que la zone d'action de la pièce intermédiaire sur l'opercule se trouve au voisinage de l'axe de ce dernier.

8. Vanne selon l'une des revendications 1 à 7, caractérisée en ce qu'un moyen élastique (26) exerce sur la pièce intermédiaire (19) une force tendant à la maintenir en position de repos, cette force étant surmontée par celle exercée par la butée (28) pour le passage en position active.

9. Vanne selon l'une des revendications 1 à 8, caractérisée en ce qu'elle comprend un ressort supplémentaire destiné à faciliter le recul de l'opercule (10) vers le tournant (5) lors de l'ouverture.

## Patentansprüche

1. Ventil mit drehbarem Ventilglied und einem Durchgangskanal in diesem, das ein Ventilgehäuse (1) aufweist, welches an zwei einander gegenüber liegenden Seiten an je eine von zwei Leitungen mit gemeinsamer Achse anschließbar ist, das im Innern dieses Gehäuses ein bewegliches Ventilglied (5) aufweist, welches um eine Achse drehbar gelagert ist, die senkrecht zur gemeinsamen Achse der beiden Leitungen verläuft, in dem durch das Ventilglied ein Durchgangskanal mit einem Querschnitt hindurchgeht, der demjenigen der Leitungen ähnlich ist, in dem das Ventilglied sich aus einer Offenstellung, in der der Durchgangskanal praktisch die gleiche Achse wie die Leitungen hat, in eine Schließstellung drehbar ist, in der die Achse des Durchgangskanals mit der Achse der Leitungen einen ungefähr rechten Winkel bildet, in dem das Ventilgehäuse und das Ventilglied mit Dichtgliedern versehen sind, die die Abdichtung des Ventils in der Schließstellung gewährleisten, in dem das drehbare Ventilglied mindestens eine Verschlußplatte (10) trägt, die in einer zur Achse der Drehbewegung senkrechten Richtung bewegbar ist, indem das drehbare Ventilglied ferner ein Zwischenstück (19) trägt, das sich zwischen dem Ventilglied und der Verschlußplatte befindet und in Bezug auf das Ventilglied beweglich ist, in dem das Ventilgehäuse einen Anschlagteil (28) aufweist, gegen den sich das Zwischenstück am Ende der Drehung bei Annäherung an die Schließstellung abstützt, der jedoch die Drehbewegung des Ventilgliedes nicht begrenzt, was durch die Relativbewegung zwischen diesen Teilen die Änderung der Bezugs-Stellung der Verschlußplatte von einer Ruhestellung zu einer Arbeitsstellung zur Folge hat, in welcher das Zwischenstück eine Kraft auf die Verschlußplatte ausübt, die diese von dem Ventilglied wegzubewegen sucht, um die Abdichtung in der Schließstellung zu gewährleisten, dadurch gekennzeichnet, daß das Zwischenstück (19) von einem Gleitstück gebildet ist, das zwischen der Verschlußplatte (10) und dem Ventilglied (5) gleitbeweglich angeordnet ist und eine Nockenfläche (23) aufweist, die mit einer auf dem Ventilglied (5) ausgebildeten Nockenfläche (24) in Eingriff steht.

2. Ventil nach Anspruch 1, dadurch gekennzeichnet, daß das drehbare Ventilglied (5) die Verschlußplatte (10) mittels einer Ausnehmung (14) trägt, die in dem Ventilglied ausgebildet ist und in der ein Zapfen (13), der von der Innenfläche der Verschlußplatte getragen wird, eingreift und frei in Richtung der Achse der Verschlußplatte gleitend verschiebbar ist.

3. Ventil nach Anspruch 2, dadurch gekennzeichnet, daß die Verschlußplatte (10) eine längs ihres Umfanges verlaufende Rippe (15) aufweist, die mit zwei kreisförmigen Führungen (16, 17) zusammenarbeitet, von denen je eine in dem unteren Teil (3) des Ventilgehäuses und eine in dem oberen Teil (2) des Ventilgehäuses ausgebildet ist und die die Amplitude von Schwenkbewegungen der Verschlußplatte begrenzen, welche von dem Spiel des Zapfens (13) in seiner Ausnehmung (14) herrühren.

4. Ventil nach Anspruch 1, dadurch gekennzeichnet, daß die Verschlußplatte (10) von dem drehbaren Ventilglied (5) mittels Halte- und Mitnahmebügeln (30) getragen wird, die in eine entlang dem Umfang der Verschlußplatte verlaufende Nut (32) mit so viel Spiel eingreifen, daß sie die Verschiebung der Verschlußplatte unter der Wirkung des Zwischenstücks (19) zulassen.

5. Ventil nach Anspruch 1, dadurch gekennzeichnet, daß die Verschlußplatte (10) direkt durch das Zwischenstück (19) derart getragen wird, daß sie sich in Bezug auf das Zwischenstück längs der Achse der Verschlußplatte verschieben kann.

6. Ventil nach einem der Ansprüche 1 bis 5, dadurch gekennzeichnet, daß die die Verschlußplatte (10) haltenden Glieder so ausgebildet sind und so angreifen, daß die Verschlußplatte sich um ihre Achse drehen und dabei während der Drehbewegung des drehbaren Ventilgliedes an dem Ventilgehäuse abrollen kann, und daß das Ventilgehäuse eine kreisförmige Führung (16, 17) an seinem oberen und/oder an seinem unteren Teil besitzt, die mit dem Rand der Verschlußplatte derart zusammenarbeitet, daß diese bei der Drehung des drehbaren Ventilgliedes eine entsprechende Drehbewegung erhält.

7. Ventil nach einem der Ansprüche 1 bis 6, dadurch gekennzeichnet, daß die Zone (25), in der das Zwischenstück (19) auf die Verschlußplatte (10) einwirkt, sich in der Nähe der Achse der Verschlußplatte befindet.

8. Ventil nach einem der Ansprüche 1 bis 7, dadurch gekennzeichnet, daß mindestens ein elastisches Glied (26) auf das Zwischenstück (19) eine Kraft ausübt, die bestrebt ist, das Zwischenstück in seiner Ruhelage zu halten, und daß diese Kraft durch diejenige Kraft überwunden wird, welche durch den Anschlagteil (28) beim Übergang des Zwischenstückes in seine Arbeitstellung ausgeübt wird.

9. Ventil nach einem der Ansprüche 1 bis 8, dadurch gekennzeichnet, daß es eine Zusatzfeder aufweist, die dazu dient, den Rücklauf der Verschlußplatte (10) zum drehbaren Ventilglied (5) hin beim Öffnen zu erleichtern.

**Claims**

1. Valve having a rotary member and an unrestricted passageway, comprising a body (1) which may be connected on two opposite sides to two conduits having the same axis, a rotary member (5) movable inside the said body by rotation about an axis perpendicular to the common axis of the conduits, the said rotary member being traversed by a port of section close to that of the conduits and rotatable from an open position where the port has substantially the same axis as the conduits to a closed position where the axis of the port makes with the axis of the conduits an approximately right angle, the body and the rotary member being provided with means for ensuring fluidtightness of the valve in the closed position, the rotary member carrying at least one plus (10) movable in a direction perpendicular to the axis of the rotation and an intermediate part (19) placed between the rotary member and the plug and movable relative to the rotary member, the body having an abutment (28) against which the intermediate part bears at the end of rotation, approaching the closed position, but does not limit the rotation of the rotary part which causes by the relative movement between these parts the change of the relative position of the plug from a rest position to an active position where the intermediate part exerts on the plug a force tending to move it away from the rotary member to ensure fluidtightness in the closed position, characterized in that the intermediate part comprises a slide which is slidable between the plug and the rotary member, which bears against the abutment during rotation of the rotary member and which has a cam surface for cooperation with a cam surface provided on the rotary member.

2. Valve according to claim 1, characterized in that the rotary member (5) carries the plug (10) by the medium of a housing (14) forming part of the said rotary member (13) and in which a teat (13) carried by the inner face of the plug slides freely in the direction of the axis of the plug.

3. Valve according to claim 2, characterized in that the plug further comprises a peripheral rib (15) which cooperates with two circular guides (16, 17) carried respectively by the bottom of the body and the top in order to limit the magnitude of pivoting of the plug resulting from the play of the teat in its housing.

4. Valve according to claim 1, characterized in that the rotary member carries the plug by the medium of holding and driving stirrup members (30) which penetrate into a peripheral groove (32) of the plug with sufficient play to permit its displacement under the action of the intermediate part.

5. Valve according to claim 1, characterized in that the plug (10) is carried directly by the intermediate part (19) while being displaceable relative to that part along the axis of the plug.

6. Valve according to one of claims 1 to 5, characterized in that the means for holding the plug are provided for permitting the plug to rotate about its axis by rolling on the body during rotation of the rotary member, and in that the body or the top of the valve comprises a circular guide (16, 17) which cooperates with the edge of the plug for driving it for rotation when the rotary member is itself in rotation.

7. Valve according to one of claims 1 to 6, characterized in that the zone of action of the intermediate part on the plug is in the vicinity of the axis of this latter.

8. Valve according to one of claims 1 to 7, characterized in that the elastic means (26) exerts on the intermediate part (19) a force tending to maintain it in the rest position, this force being overcome by that exerted by the abutment (28) for changing to the active position.

9. Valve according to one claims 1 to 8, characterized in that it comprises an additional· spring adapted to facilitate the retraction of the plug (10) towards the rotary member (5) during opening.

FIG.1

0 000 682

1

FIG.2

FIG.4

FIG.3

0 000 682